# EUROPÄISCHE PATENTSCHRIFT

(11) **EP 1 375 058 B1**
(45) Veröffentlichungstag und Bekanntmachung des Hinweises auf die Patenterteilung: **06.09.2006**
(21) Anmeldenummer: 03090086.4
(22) Anmeldetag: 27.03.2003
(51) Int. Cl.: B23Q 3/10

(54) **Aufspannkörper einer Paletten-Vorrichtung**
Clamping device for a pallet device
Moyen de serrage pour une palette

(30) Priorität: 25.04.2002 DE 10218468
(43) Veröffentlichungstag der Anmeldung: 02.01.2004
(73) Patentinhaber: HOHENSTEIN Vorrichtungsbau und Spannsysteme GmbH, 09337 Hohenstein-Ernstthal (DE); Cross Hüller GmbH, 71636 Ludwigsburg (DE)
(72) Erfinder: Gleich, Peter, 09221 Neukirchen (DE); Konold, Titus, 71640 Ludwigsburg (DE); Tanner, Andreas, 01689 Niederau (DE); Vötisch, Ralf, 08066 Zwickau (DE); Kramer, Wolfgang, 08056 Zwickau (DE)
(74) Vertreter: Grosse, Ulrich

(56) Entgegenhaltungen:
- EP-A- 0 310 937
- DE-A- 3 612 593
- DE-U- 29 903 976

## Beschreibung

Die Erfindung geht von dem im Oberbegriff des Patentanspruches 1 definiertem Gegenstand aus.

Die auf Bohr-Fräs-Bearbeitungszentren zum Einsatz kommenden Spannvorrichtungen für die Positionierung und Spannung von Werkstücken bestehen im wesentlichen aus einem Aufspannkörper, dessen Fußkörper, in Kontur und Dimensionierung, der Maschinenpalette auf den Bohr-Fräs-Bearbeitungszentren entspricht. Die Ausbildung dieser spanenden Bearbeitungszentren für die Erzielung höherer Beschleunigungen und damit einer hohen Prozeßdynamik, höherer Produktivität und Agilität erfordern eine deutliche Verringerung der zu bewegenden Massen. Die Leichtgewichtigkeit der insgesamt zu bewegenden Systemeinheiten bedingt auch eine Massereduzierung an den bewegten Peripheriebaugruppen, Spannvorrichtungen und Maschinenpaletten. Die leichtgewichtigen Ausbildungen von Spannvorrichtungen müssen über eine ausreichende Steifigkeit verfügen, um hohe Zerspanungskräfte aufnehmen zu können.

Es gilt, Leichtbau-Strukturen für Spannvorrichtungen vorzuschlagen, die den Bedingungen der Bewegung unter den Bedingungen hoher Prozeßdynamik entsprechen.

Bekannt sind Ausbildungen von Spannvorrichtungen, die auf den Maschinenpaletten von Bohr-Fräs-Bearbeitungszentren zur Anwendung kommen, deren Aufspannkörper hoch ausgebildet ist, so daß der Arbeitsraum des Bearbeitungszentrums weitestgehend genutzt wird.

Beispielhaft sollen Ausbildungen benannt werden, wobei auf einem Grundkörper oder auf einer Grundplatte senkrecht stehend, eine Spannwand oder ein Vierkant-Hohlkörper in einer Mittenlage fest angeordnet ist. Die senkrechten Peripherieflächen der Spannwand oder des Vierkanthohlkörpers werden als Anlage- und Aufspannflächen für, in der Regel mehrere, kleindimensionierte Werkstücke genutzt. Dazu sind an diesen Peripherieflächen auch Positionier- und Spannelemente für eine wiederholbar lagegenaue und feste Positionierung der spanend zu fertigenden Werkstücke angeordnet.

Ein Beispiel für die Ausbildung eines Aufspannkörpers mit senkrecht stehender Spannwand ist in DE 4200780 C2, ein Beispiel für die Ausbildung als Vierkant-Hohlkörper ist in DE 8713569 U1 dargestellt.

Aus der DE 29903976 U1 ist weiterhin ein Aufspannkörper entsprechend dem Oberbegriff von Anspruch 1 bekannt. Zur Schwingungsdämpfung ist dort der durch vertikale, dünnwandige Spannplatten gebildete Mittenhohlraum zusätzlich mit einem dämpfenden Werkstoff verfüllt.

Um eine ausreichende Steifigkeit der plattenartigen Spannwand zu gewährleisten, ist es u. a. aus der DE 3612593 A1 und aus der DE19639527 C1 bekannt, die plattenartige Spannwand durch eine oder mehrere rechtwinklig zu ihr angeordnete Platten oder Rippen gegenüber Zerspanungskräften, insbesondere bei hoher Prozeßdynamik abzustützen und zu stabilisieren.

Wenn unter dem Aspekt einer effektiven Nutzung des Arbeitsraumes eines Bohr-Fräs-Bearbeitungszentrums als Spannraum für Werkstücke die Spannwand eines leichtgewichtigen Aufspannkörpers, wie in DE 4331166 C2 beschrieben, als eine Mehrfach-Neben- und Übereinander-Anordnung von Hohl- oder Vollsäulen ausgebildet ist, die um oder zwischen den zu spannenden Werkstücken positioniert sind, ist die Steifigkeit nur bei geringeren Zerspanungskräften gewährleistet. Die Verankerung der beiden Enden dieser Hohl- oder Vollsäulen, jeweils einerseits in der Grund- oder Fußplatte und andererseits in einer Auflageplatte realisiert, jeweils kassettenartig strukturiert, Räume für die Werkstückspannung bildend, ist aber bei hoher Prozeßdynamik, wie sie bei großdimensionierten Werkstücken üblich ist, nicht ausreichend steif.

Daraus leitet sich die Aufgabe ab, insbesondere für großdemensionierte Werkstücke unter den Bedingungen einer vom Bohr-Fräs-Bearbeitungszentrum ausgehenden hohen Prozeßdynamik, hoher Produktivität und Agilität eine steife und leichtgewichtige Spannvorrichtung auszubilden.

Die Struktur der Elemente, die die Spannwand oder den Aufspannkörper einer Spannvorrichtung bilden, die ihrerseits auf Maschinenpaletten angeordnet und mit diesen als Peripherie-Baugruppe des Bearbeitungszentrums auch mit hoher Geschwindigkeit bewegt wird, war unter den Bedingungen des Leichtbaus, ohne Vorbilder des Standes der Technik, neu zu entwickeln.

Der im Patentanspruch 1 angegebenen Erfindung liegt das Problem zugrunde, für die Serienfertigung von Werkstücken mittlerer und großer Dimensionierung auf Bohr-Fräs-Bearbeitungszentren unter den Bedingungen einer hohen Prozeßdynamik, Agilität und geringen Tischbelastbarkeit einen steifen Aufspannkörper für Paletten-Spannvorrichtungen in Leichtbauweise auszubilden.

Das Problem wird durch die im Patentanspruch 1 aufgeführten Merkmale gelöst.

Die Spannwand des Aufspannkörpers ist im Querschnitt als ein II-förmiger Hohlkörper strukturiert.

Zwei parallele, stehend angeordnete, dünnwandige Hohlsäulen sind über eine am Umfang der Hohlsäulen, festanliegende Spannflächen-Platte fest verbunden und schließen dreiseitig einen Mittenhohlraum ein.

Die Hohlsäulen der Spannwand haben wahlweise eine Achteck-, Viereck-, Dreieck- oder Kreisring-Querschnittsform.

Der dreiseitig umschlossene Mitten-Hohlraum in der Spannwand ist ergänzend durch parallel senkrechte und/oder waagerechte Rippen segmentiert.

Die vierte, freie Seite des Mitten-Hohlraumes ist durch einen Querschott und/oder durch eine biegesteife Verschlußplatte mit den Hohlsäulen verbunden.

Weitere Ausgestaltungen der Erfindung sind in den Patentansprüchen 2 und 3 angegeben.

Ergänzend zur Ausbildung der Spannwand wird der Fußkörper des Aufspannkörpers steif und in Leichtbauweise strukturiert.

Die Maßverhältnisse der Wanddicken und der Spannflächen-Plattenstärke und die Ausbildung des Fußkörpers sind unter den Bedingungen von Steifigkeit und Leichtgewichtigkeit optimiert.

Ein Ausführungsbeispiel der Erfindung ist in Ausbildungsvarianten in den Figuren vereinfacht dargestellt und wird im folgenden Teil der Beschreibung näher erläutert:
- Fig. 1: eine Draufsicht auf den Aufspannkörper in Schnittdarstellung mit längs geteilter Achteck-Ausbildung der Hohlsäulen
- Fig. 2: eine Draufsicht, wie Fig. 1,
mit längs geteilter Viereck-Ausbildung der Hohlsäulen
- Fig. 3: eine Draufsicht, wie Fig. 1,
mit längs geteilter Dreieck-Ausbildung der Hohlsäulen
- Fig. 4: eine Draufsicht, wie Fig. 1,
mit längs geteilter Kreisring-Ausbildung der Hohlsäulen
- Fig. 5: eine Draufsicht, wie Fig. 1,
mit zwei Hohlsäulen in Kreisring-Ausbildung
- Fig. 6: eine Seitenansicht des Aufspannkörpers als hydraulisch spannende Paletten-Spannvorrichtung
für ein gehäuseförmiges Werkstück, im Mittenschnitt.

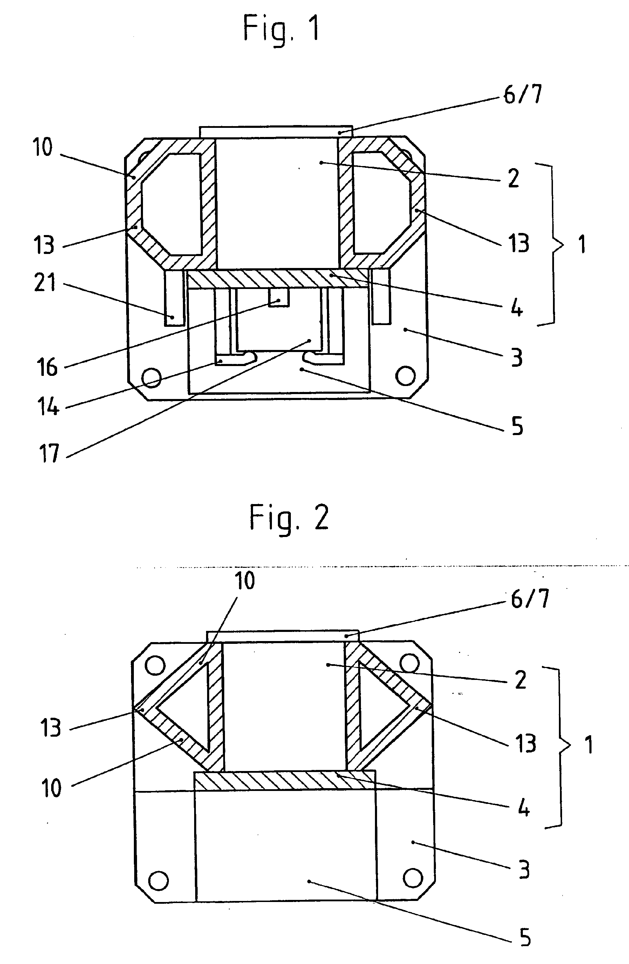

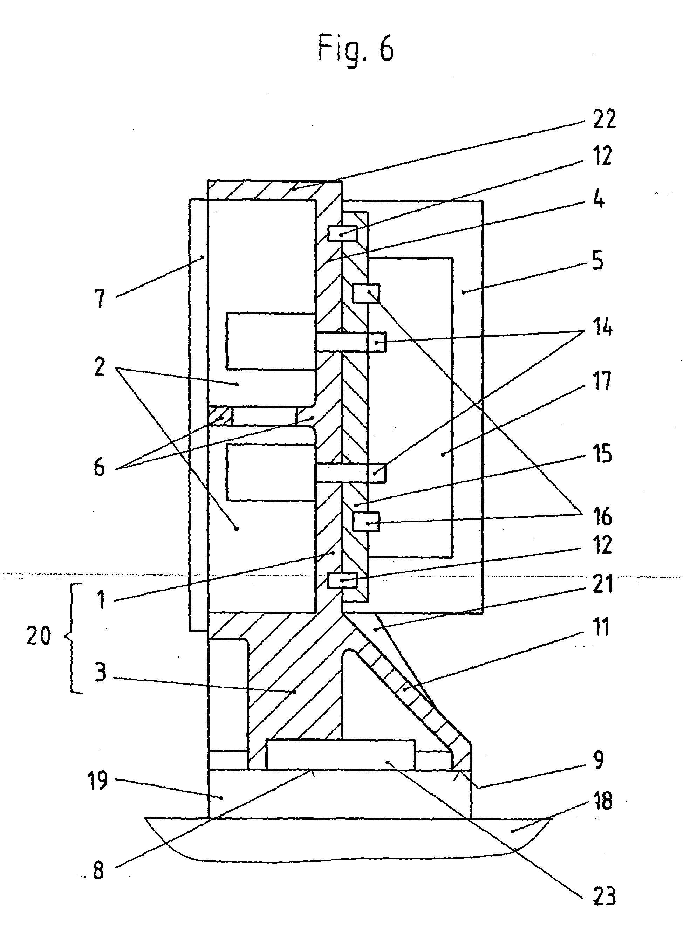

Der in den Fig. 1 bis 6 einstückig dargestellte Aufspannkörper 20 besteht im wesentlichen aus einem Fußkörper 3 und einer Spannwand 1. Die Spannwand 1 ist in einer II-förmigen Querschnittsform als Hohlkörper ausgebildet. Die Spannwand 1 besteht aus zwei parallelen, stehend auf dem Fußkörper 3 angeordneten Hohlsäulen 13, die auf der Seite des Spannraumes 5 für das Werkstück 17 über die Spannflächen-Platte 4, fest am Umfang der Hohlsäulen 13 anliegend, miteinander verbunden sind. Von drei Seiten umschließen und begrenzen die Hohlsäulen 12 und die Spannflächen-Platte 4 einen rechteckigen Mitten-Hohlraum 2. Auf der vierten, rückseitigen Seite der Spannwand 1 ist der Mitten-Hohlraum 2 durch einen stabilisierenden Querschott 9 und/oder durch eine schmutzabweisende biegesteife Verschlußplatte 7 begrenzt. Der Mitten-Hohlraum 2 ist ergänzend durch in Fig. 6 dargestellte parallele senkrechte und waagerechte Rippen segmentiert und stabilisiert.

In den Fig. 1, 2 und 6 ist dargestellt, daß das Maßverhältnis der Stärke der Spannflächen-Platte 4 und der Wanddicke 10 der Hohlsäulen 13 an der Spannwand 1 2:1 ist.
Daß Maßverhältnis der in Fig. 6 dargestellten Auslaufhöhe 12 der Schrägen 11 des Fußkörpers 3 und der Höhe der Spannwand ist 1:3.

Bei der in Fig. 1 vereinfacht dargestellten Paletten-Spannvorrichtung ist die Spannwand 1 durch zwei Hohlsäulen 13 begrenzt, die als längsmittengeteilte Rohrhälften in einer Achteck-Querschnittsform ausgebildet sind, begrenzt. Der Aufspannkörper 20 ist als Aluminium-Gußkörper ausgebildet. Die Spannwand 1 ist mittels Stützrippen 22 auf dem Fußkörper 3 abgestützt. An der zum Spannraum 5 hin gerichteten Seite der Spannflächen-Platte 4 liegt das Werkstück 17, zum Beispiel ein Motorengehäuse, an und ist mittels Positioniermitteln 16 wiederholbar lagegenau positioniert und mittels Werkstück-Spannmitteln 14, zum Beispiel hydraulisch betätigten Schwenkspannern, fest und sicher gespannt.

Die Spannwand 1 der in Fig. 2 dargestellten Paletten-Spannvorrichtung ist durch die Viereck-Querschnittsform gekennzeichnet, in der die längsmittengeteilten Rohrhälften der Hohlsäulen 13 ausgebildet sind.

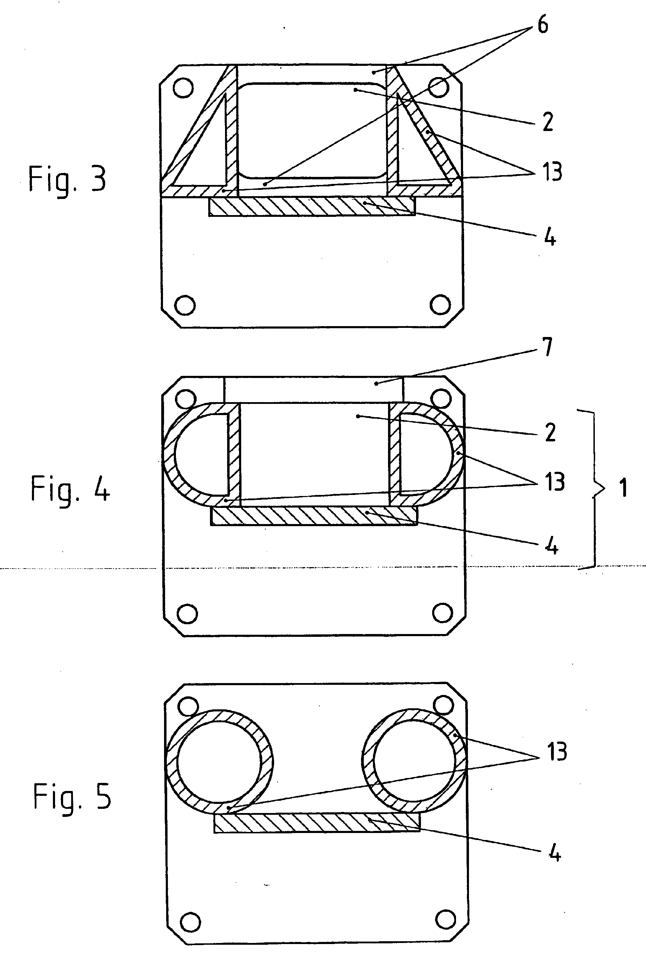

Der Querschnitt der Hohlsäulen 13 der Spannwand 1 ist in
Fig. 3 als längsmittengeteilte Rohrhälften in Dreieckform,
Fig. 4 als längsmittengeteilte Rohrhälften in Kreisringform und in
Fig. 5 als zwei zylindrische ungeteilte Rohre ausgebildet.
Die in den Fig. 2 bis 6 dargestellten Aufspannkörper 20 sind als dünnwandige Stahl-Schweißkörper ausgebildet.

Die in Fig. 6 dargestellte, hydraulisch spannende, Paletten-Spannvorrichtung ist auf dem Maschinentisch 19 eines Bohr-Fräs-Bearbeitungszentrums 18, mit seiner Grundfläche 8 aufliegend, positioniert und befestigt.

Der Fußkörper 3 entspricht in seiner Form und Dimensionierung der Form und Dimensionierung des Maschinentisches 19. Über die Schnittstellen-Platte 2 erfolgt die Drucköl- und Druckluft-Zuführung und -Ableitung vom und zum Bohr-Fräs-Bearbeitungszentrum 18 in den Aufspannkörper 20.

Der Fußkörper 3 des Aufspannkörpers 20 steht in seiner quergerichteten Längenausdehnung, um das Tiefenmaß des Spannraumes 5, gegenüber der Spannflächen-Platte 4 an der Spannwand 1 vor. Der über die Schrägen 11 dachförmig nach oben verlaufende Fußkörper 3 ist hohl und dünnwandig ausgebildet. An seiner Grundfläche 8 ist ein kragenförmig vorstehender, umlaufender Steg 9, der dreiseitig entlang der Außenkontur verläuft, angeordnet. Der dreiseitige Stegverlauf entspricht der Anordnung des II-förmigen Querschnittes der Spannwand 1.

Über dem Fußkörper 3 ist die hohlstrukturierte Spannwand 1 angeordnet und mit Stützrippen 21 abgestützt. An ihrer Spannflächen-Platte 4 ist eine Adapterplatte 15 abnehmbar positioniert und mittels Werkstück-Spannmittel 14 befestigt. Das Werkstück 17 ist mittels Positioniermitteln 16 auf der Adapterplatte 15 positioniert und gespannt. Die Werkstück-Spannmittel 14 sind, hier als zwei öldruckbetätigte Spannklemmen, die in dem Mitten-Hohlraum 2 angeordnet sind und in den Spannraum 5 ragen, ausgebildet.

Der Mitten-Hohlraum 2 in der Spannwand 1 ist durch die Abdeckplatte 21 und, rückseitig, gegenüber der Spannflächen-Platte 4, mit der Verschlußplatte 7 gegen Schmutz und Späne abgeschirmt und ergänzend stabilisiert. Der Querschott 6 verbindet die in Fig. 6 nicht dargestellten Hohlsäulen und stabilisert ebenfalls die Spannwand 1.

Die gefundene dünnwandige Hohlkörper-Struktur des Aufspannkörpers 20 ermöglicht eine große Gewichtserleichterung bei ausreichender Steife unter den Bedingungen hoher Prozeßdynamik, Produktivität des Prozesses und Agilität an hochproduktiven spanenden Bearbeitungszentren.

### Aufstellung der verwendeten Bezugszeichen

- 1: Spannwand
- 2: Mitten-Hohlraum
- 3: Fußkörper
- 4: Spannflächen-Platte
- 5: Spannraum
- 6: Querschott
- 7: Verschlußplatte
- 8: Grundfläche
- 9: Steg
- 10: Wanddicke - der Spannwand 1
- 11: Schrägen - des Fußkörpers 3
- 12: Auslaufhöhe - der Schräge 11
- 13: Hohlsäulen
- 14: Werkstück-Spannmittel
- 15: Adapterplatte
- 16: Positioniermittel
- 17: Werkstück
- 18: Bohr-Fräs-Bearbeitungszentrum
- 19: Maschinentisch
- 20: Aufspannkörper
- 21: Stützrippen
- 22: Abdeckplatte
- 23: Schnittstellen-Platte

## Patentansprüche

1. Aufspannkörper einer Paletten-Spannvorrichtung für die Teilefertigung auf Bohr-Fräs-Bearbeitungszentren, aus einer lotrechten Spannwand (1) bestehend, die über Stützrippen (22) und dachförmige Schrägen (11) mit einem, entsprechend dem Maschinentisch größer dimensionierten, Fußkörper (3) einstückig verbunden ist und in Struktur-Leichtbauweise ausgebildet ist,
**dadurch gekennzeichnet,**
**daß** die Spannwand (1) ein dünnwandiger Hohlkörper ist, dessen II-förmige, einen rechteckigen Mitten-Hohlraum (2) umschließende, Querschnittsform, durch zwei parallele, stehend angeordnete Hohlsäulen (13) und eine, an deren Umfang fest anliegende, diese verbindende, Spannflächen-Platte (4) gebildet ist und
**daß** die Hohlsäulen (13) wahlweise als längs mittengeteilte, im Abstand befindlichen Hälften eines Rohres mit
- Achteck-,
- Viereck-,
- Dreieck- oder
- Kreisring-Querschnittsform oder als
- zylindrische ungeteilte Rohre
ausgebildet sind und
**daß** der Mitten-Hohlraum (2) in der Spannwand (1) ergänzend durch parallele senkrechte und/oder waagerechte Rippen segmentiert ist und
**daß** die Hohlsäulen (13) beidseitig des Mitten-Hohlraumes (2), der Spannflächen-Platte (4) gegenüberliegend, durch mindestens einen Querschott (6) oder durch eine biegesteife Verschlußplatte (7) miteinander verbunden sind.

2. Aufspannkörper einer Paletten-Spannvorrichtung nach Patentanspruch 1,
**dadurch gekennzeichnet,**
**daß** der Fußkörper (3) um das Tiefenmaß des Spannraumes (5) gegenüber der Spannflächen-Platte (4) an der Spannwand (1) vorsteht und
**daß** die Grundfläche (8) des hohl und dünnwandig ausgebildeten Fußkörpers (3) als ein kragenförmig vorstehender, an drei Seiten umlaufender Steg (9), entlang der Außenkontur entsprechend der II-förmigen Querschnittsform der Spannwand (1) verlaufend, ausgebildet ist.

3. Aufspannkörper einer Paletten-Spannvonrrichtung nach Patentanspruch 1,
**dadurch gekennzeichnet,**
**daß** das Maßverhältnis der Auslaufhöhe der Schrägen (11) des Fußkörpers und der Höhe der Spannwand (1) maximal 1:1 ist.

## Claims

1. Clamping device for a pallet device designed for the part production on drilling /milling machining centres, consisting of a vertical clamping wall (1) coupled in one piece to the base plate (3) the larger dimension of which corresponds to the machine table, via support ribs (22) and dome-shaped inclines (11) and being developed in light-weight structure;
**characterised in**
**that** the clamping wall (1) is a thin-walled, hollow body the U-shaped cross section of which encircling a rectangular, central hollow space (2) is built up by two parallel, upright, hollow columns (13) and one plate (4) providing the clamping surface which tightly fits on the hollow columns' circumferences and couples them together, and
**that** the hollow columns (13) are developed as spaced tube halves longitudinally split through their centre, the cross section shape of which optionally can be:
- an octagon;
- a quadrangle;
- a triangle or
- an annulus, or which can be designed as
- cylindrical, entire tubes,
and
**that** the central hollow space (2) in the clamping wall (1) additionally is segmented by parallel, vertical and / or horizontal ribs, and
**that** the hollow columns (13) are coupled together at both sides of the central hollow space (2) in front of the plate (4) providing the clamping surface by at least one transverse bulkhead (6) or one rigid closing plate (7).

2. Clamping device for a pallet device as per patent claim 1
**characterised in**
**that** the base plate (3) protrudes by the depth size of the clamping area (5) from the plate 4 providing the Clamping surface on clamping wall 1 and
**that** the base area (8) of the hollow and thin-walled base plate (3) is developed as a web 9 protruding like a collar and running at three sides along the outer contour according to the U-shaped cross section of the clamping wall (1).

3. Clamping device for a pallet device as per patent claim 1
**characterised in**
**that** the maximum dimensional proportion is 1:1 between the run out height of the base plate's inclines (11) and the height of the clamping wall (1).

## Revendications

1. Moyen de serrage pour une palette servant à l'usinage de pièces sur des centres d'aléseuse-fraiseuse, étant composé d'une paroi de serrage verticale (1) qui est liée en une seule pièce avec un corps de base (3) dimensionné plus grand en fonction de la table machine, moyennant des nervures support (22) et des plans inclinés en forme de toit et étant configuré en construction légère structurée,
**caractérisé en ce que**
la paroi de serrage (1) constitue un corps creux à paroi mince dont la section transversale en forme de U encerclant un creux central carré (2) est formée par deux colonnes creuses parallèles et verticales (13) et une plaque à surface de fixation (4) s'appliquant étroitement contre la circonférence de celles-ci tout en les reliant, et
que les colonnes creuses (13) sont configurées en tant que moitiés écartées d'un tube divisé longitudinalement, dont la section transversale peut avoir à option la forme
- d'un octogone,
- d'une figure tétragone,
- d'un triangle ou
- d'un anneau de cercle ou être configurée en tant que
- tubes cylindriques non divisés
et
que le creux central (2) dans la paroi de serrage (1) est segmenté en plus par des nervures parallèles verticales et / ou horizontales, et
que les colonnes creuses (13) sur les deux côtés du creux central (2) en face de la plaque à surface de fixation (4) sont reliées l'une avec l'autre par au moins une cloison transversale (6) ou une plaque de fermeture (7) résistant à la flexion.

2. Moyen de serrage pour une palette suivant revendication 1,
**caractérisé en ce que**
le corps de base (3) fait saillie par rapport à la plaque à surface de fixation (4) sur la paroi de serrage (1) par le montant de la profondeur de la zone de bridage (5) et
que la surface de base (8) du corps de base (3) creux et à paroi mince est configurée en tant que nervure périphérique (9) faisant saillie en forme de collet et passant sur trois côtés le long du contour extérieur conformément à la section transversale en forme de U de la paroi de serrage (1).

3. Moyen de serrage pour une palette suivant revendication 1,
**caractérisé en ce que**
le rapport dimensionnel entre la hauteur des plans inclinés (11) du corps de base et la hauteur de la paroi de serrage (1) est 1:1 au maximum.
